# EUROPÄISCHE PATENTSCHRIFT

(11) **EP 0 559 931 B1**
(45) Veröffentlichungstag und Bekanntmachung des Hinweises auf die Patenterteilung: **20.09.1995**
(21) Anmeldenummer: 92104094.5
(22) Anmeldetag: 10.03.1992
(51) Int. Cl.: E05F 15/16, F16H 55/22, H02K 7/116, H02K 5/124, H02K 7/08, F16C 33/74, F16H 1/16

(54) **Kraftfahrzeug-Getriebemotorantrieb, insbesondere Fensterheberantrieb**
Geared motor drive for automotive vehicles, in particular window-lifting drive
Entraînement par moto-réducteur pour véhicules automobiles, en particulier entraînement pour lève-glace

(43) Veröffentlichungstag der Anmeldung: 15.09.1993
(73) Patentinhaber: SIEMENS AKTIENGESELLSCHAFT, 80333 München (DE)
(72) Erfinder: Kümmel, Alfred, Dipl.-Ing., W-8710 Kitzingen (DE)

(56) Entgegenhaltungen:
- DE-A- 3 414 842
- DE-A- 3 434 093
- US-A- 3 535 948

## Beschreibung

Die Erfindung bezieht sich auf einen Kraftfahrzeug-Getriebemotorantrieb gemaß Oberbegriff des Anspruchs 1; ein Fensterheberantrieb dieser Art ist durch die DE-U-89 03 714 bekannt.

Im bekannten vorgenannten Fall ragt die Rotorwelle als fliegende Antriebs-Schneckenwelle in das Getriebegehäuse und kämmt dort mit einem Getrieberad eines Seilzug-Fensterhebers. Die Rotorwelle ist im Übergangsbereich zwischen dem Motorgehäuse und dem Getriebegehäuse in einer Kalotten-Lagerung in einem zur Befestigung am Motorgehäuse dienenden Flansch des Getriebegehäuses und durch eine weiteres Kalottenlager am getriebegehäuseabgewandten Ende des Elektromotors im Motorgehäuse gelagert. Zum Schutz gegen ansonsten in das Motorgehäuse eindringende Feuchtigkeit ist jeweils eine Dichtung zwischen dem Getriebegehäuse und dem dieses verschließenden Getriebegehäusedeckel sowie den eingeführten Seilzügen und ihren getriebegehäuseseitigen Seilführungen als auch zwischen den bei der gegenseitigen Montage von Motorgehäuse und Getriebegehäuse voreinander zu Anlage kommenden Stirnseiten dieser Bauteile derart vorgesehen, daß die komplette Einheit des Fensterheberantriebes wasserdicht ausgeführt ist. Zur Schmierung von Lager- und Getriebeteilen sind bei Fensterheberantrieben üblicherweise nichtflüssige Dauerschmierstoffe bei der Erstmontage den Lager bzw. Getriebeteilen beigegeben.

Durch die US-A-3 535 948 ist ein insbesondere für maschinelle Dosenöffner einzusetzendes Schnecken-Untersetzungsgetriebe bekannt, bei dem das Schneckenrad aus Kunststoff, z.B. Delrin, gespritzt ist und dem Kunststoff zur Gewährleistung eines Selbstschmiereffektes Molybden Disulphid beigemischt sein kann.

Gemäß Aufgabe vorliegender Erfindung soll ein auch für lange Betriebsstandzeiten wartungsfreier, die Sicherheitsanforderungen erfüllender und trotztem mit geringerem konstruktivem montagetechnischen Aufwand erstellbarer Getriebemotorantrieb, insbesondere zum Einsatz als Fensterheber- bzw. Schiebedachantrieb in einem Kraftfahrzeug, geschaffen werden; die Lösung dieser Aufgabe gelingt bei einem Getriebemotorantrieb der eingangs genannten Art durch die Lehre des Anspruchs 1; vorteilhafte Ausgestaltungen der Erfindung sind jeweils Gegenstand der Unteransprüche.

Bei dem erfindungsgemäßen Getriebemotorantrieb kann auf eine gesonderte äußere Dauerschmierstoffbeigabe verzichtet und eine solche Reibzahl auch bei längerem Betriebseinsatz gewährleistet werden, daß ein ungewollter Betrieb in Gegenrichtung zum Motorbetrieb und somit z.B. ein ungewolltes Aufdrücken einer Kraftfahrzeug-Fensterscheibe allein durch die Selbsthemmungseigenschaft des Getriebes verhindert werden kann. In vorteilhafter Weise ist bei einem üblichen Fensterheberantrieb je nach der jeweiligen Steigungsauslegung der Schneckenwelle und dem im Sinne einer gewünschten Selbsthemmungseigenschaft vorgegebenen Reibwert zwischen Schneckenrad und Schneckenwelle ein Anteil des gleitmodifizierten Kunststoffs zwischen 20 % und 50 % vorgesehen. Nach einer spezifischen Ausgestaltung der Erfindung ist bei einer aus gehärtetem Stahl gefertigten Schneckenwelle ein Schneckenrad aus einem handelsüblichen POM-Kunststoff, wie z.B. Delrin 100 oder Delrin 500 der Fa. Du Pont, mit einem gleitmodifizierten POM-Kunststoff, wie z.B. Delrin 100 CL bzw. Delrin 500 CL der Fa. Du Pont, verschnitten. Zu POM-Kunststoffen zählen üblicherweise Polyoximethylen bzw. Polyacetal.

Weiterhin kann in vorteilhafter Weise auf ein bei der Montage des Getriebes von außen beizugebendes Schmierfett und auf eine gesonderte Abdichtung des Getriebegehäuseteils nach außen verzichtet werden, so daß z.B. über die Seilführungen, in denen die Seilzüge eines Seilzugfensterhebers zu einer axial dem Schneckenrad vorgelagerten und von diesem mitgenommenen Seilscheibe in den Getriebegehäuseteil geführt sind, Feuchtigkeit in den Getriebegehäuseteil eindringen kann. Neben einer sonst üblichen Abdichtung zwischen den Seilzügen und den diese umgebenden Seilführungen kann auch auf eine ansonsten notwendige Abdichtung zwischen einem topfförmigen und einem dieses nach seiner Bestückung abschließenden Getriebegehäusedeckel bzw. zwischen einem u.U. gegebenen gesonderten Seilscheibengehäuseteil und dem Getriebegehäuseteil verzichtet werden.

Um in jedem Fall ein Weitereindringen von Feuchtigkeit aus dem Getriebegehäuseteil in den Motorgehäuseteil über ein als Lagerung für die Rotorwelle bzw. die Schneckenwelle vorgesehenes Kalottenlager im Bereich des Übergangs zwischen dem Motorgehäuseteil und dem Getriebegehäuseteil zu verhindern, ist in fertigungs- und montagetechnisch einfacher Weise eine getriebegehäuseteilseitig vor der Kalotte in ihrer Kalottenaufnahme mitgehalterte und durch die Kalotte dichtend gegen die Kalottenaufnahme bzw. die Schneckenwelle angedrückte einstückige Doppellippendichtung mit zumindest zwei in axialem Abstand hintereinander dichtend auf der Rotorwelle aufliegenden Dichtlippen und einem zwischenliegenden Schmierstoff-Depot vorgesehen.

Die Erfindung sowie weitere vorteilhafte Ausgestaltungen der Erfindung werden im folgenden anhand eines schematisch dargestellten Ausführungsbeispiels in der Zeichnung näher erläutert; darin zeigen
- FIG 1: in einem axialen Teilschnitt-Längsbild den grundsätzlichen Aufbau eines Seil-Fensterheberantriebes,
- FIG 2: in einem vergrößerten Ausschnitt aus Figur 1 eine in der Kalottenlagerung aufgenommene Doppellippen-Dichtung.

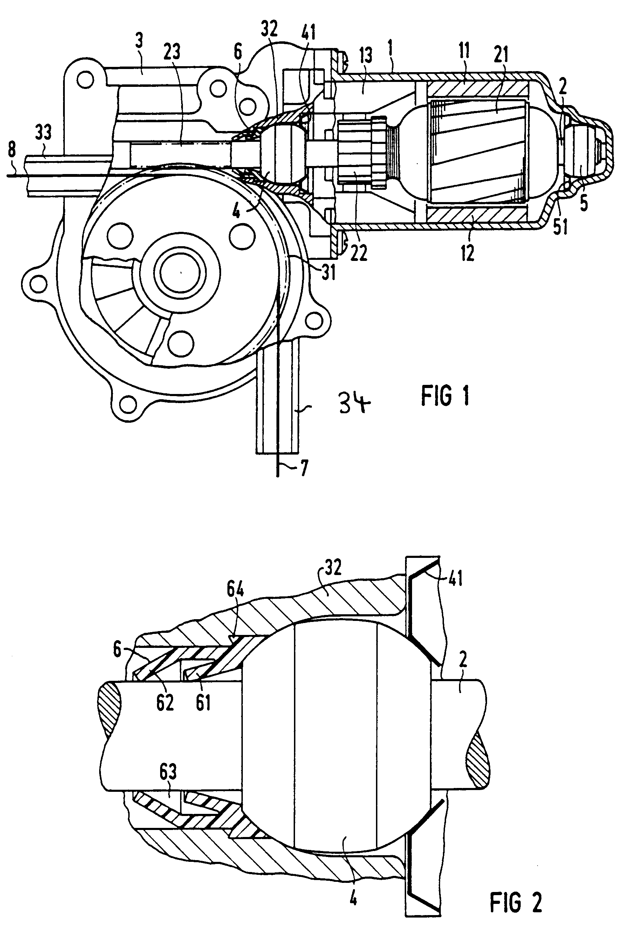

Figur 1 zeigt in einem axialen Teilschnitt-Längsbild den Prinzipaufbau eines elektromotorischen Kraftfahrzeug-Seilfensterantriebes mit einem Motorgehäuseteil 1 und einem daran unter Zwischenlage einer hier nicht sichtbaren Dichtung angeflanschten Getriebegehäuseteil 3. Im Innenraum des topfförmigen Motorgehäuseteils 1 sind an dessen Umfangsfläche teilschalenförmige Dauermagnetschalen 11 bzw.12 für die elektrische Erregung gehaltert; axial vor den Dauermagnetschalen 11;12 ist getriebegehäuseteilseitig ein Bürstensystem 13 des hier vorgesehenen Kommutatormotors angeordnet. Die ein bewickeltes Rotorpaket 21 sowie einen Kommutator 22 aufnehmene Rotorwelle 2 ist in einem ersten Kalottenlager 4 in dem zur Befestigung des Motorgehäuseteils 1 an den Getriebegehäuseteil 3 angeformten Befestigungsflansch und in einem zweiten Kalottenlager 5 in dem getriebegehäuseteilabgewandten Topfboden des Motorgehäuses 1 gelagert, ragt als fliegende Welle mit einer Schneckenwelle 23 in den Getriebegehäuseteil 3 und kämmt dort mit einem Getrieberad 31. Das Kalottenlager 4 ist durch eine Klemmbrille 41 in die kugelschalenförmige Kalottenlagerung 32 des Befestigungsflansches des Getriebegehäuseteils 3 und das Kalottenlager 5 ist durch eine Klemmbrille 51 in eine topfförmige Aufnahme des Topfbodens des Motorgehäuseteils 1 gedrückt.

Wie insbesondere aus der Detail-Ausschnittvergrößerung gemäß Figur 2 ersichtlich, ist in der Kalottenhalterung 32 nach einer Ausgestaltung der Erfindung eine Doppellippen-Dichtung 6 derart aufgenommen, daß sie durch den Andruck der Kalotte mit einer getriebegehäuseteilseitigen Aufnahme 64 formschlüssig gehaltert und mit ihrer ersten Dichtlippe 71 bzw. ihrer zweiten Dichtlippe 62 einerseits durch einen axialen Druck der Kalotte 4, z.B. durch die Klemmbrille 41 bzw. einen Axialzug auf die Rotorwelle 2 bzw. durch einen Überdruck im Getriebegehäuseteil 3 bzw. Unterdruck im Motorgehäuseteil 1 dichtend auf die Oberfläche der Rotorwelle 2 aufgedrückt wird. Die Dichtlippen 61 bzw.62 sind derart in axialem Abstand angeordnet und als Teile der Wellendichtung 6 geformt, daß zwischen ihnen ein Schmierstoff-Depot 63 entsteht, das ein Schmiermittel zur Dauerschmierung der Wellenlagerung bzw. der Dichtlippen 61 bzw. 62 aufnehmen kann.

Durch die erfindungsgemäße Wellendichtung können sowohl die elektrischen Bauteile im Motorgehäuseteil als auch sämtliche Lager der Rotorwelle feuchtigkeitsdicht nach außen abgeschlossen werden, so daß auf eine komplette Abdichtung der gesamten Motor-Getriebe-Einheit mit mehreren, an verschiedenen Stellen am Getriebegehäuseteil anzubringenden Dichtungen vorteilhafterweise verzichtet werden kann; dementsprechend ist z.B. gemäß FIG 1 auf eine Abdichtung des eingehenden bzw. abgehenden Seizuges 7 bzw. 8 relativ zu ihrer jeweiligen Seilführung 34 bzw.33 am Getriebegehäuseteil 3 verzichtet.

Um trotz des Verzichtes auf eine äußere Abdichtung des Getriebegehäuseteils 3 einen zu hohen Getriebeverschleiß vermeiden zu können, ist erfindungsgemäß unter Verzicht auf eine äußere Beigabe von, u.U. durch eindringende Feuchtigkeit auswaschbarem Schmierfett, bei einer üblicherweise aus Stahl bestehenden Rotorwelle 2 ein Schneckenrad 31 aus POM-Kunststoff mit einer Beigabe von gleitmodifiziertem POM-Kunststoff vorgesehen; bei einem Beimischungsverhältnis von 20%-50% kann je nach dem jeweiligen Steigungsverhältnis der Schneckenwelle 23 ein Reibwert von dem Schneckenrad 31 gegenüber der Schneckenwelle 23 erreicht werden, der auch bei langen Betriebsstandzeiten eine sichere Selbsthemmung im Sinne eine unerwünschten Öffnungsbewegung, z.B. des Fensters eines Kraftfahrzeuges , mit einer Bewegung des Schneckenrades 31 entgegen seiner motorseitigen Antriebsrichtung gewährleistet.

Die erfindungsgemäße Ausführung des Schneckenrades 31 als einziges Mittel zur Selbsthemmung in einem hier angesprochenen Anwendungsfall kann auch im Rahmen der Erfindung Anwendung finden, unabhängig vom Vorhandensein spezieller Abdichtungen des Getriebegehäuseteils.

## Patentansprüche

1. Kraftfahrzeug-Getriebemotorantreib, insbesondere Fensterheberantrieb, mit einem Schneckengetriebe, bestehend aus einer Schneckenwelle (23) auf einer in einen Getriebegehäuseteil (3) aus einem angeflanschten Motorgehäuseteil (1) eines Elektromotors verlängerten Rotorwelle (2) und einem damit kämmenden, in dem Getriebegehäuseteil (3) gelagerten Schneckenrad (31), **gekennzeichnet durch** ein mit einer Stahl-Schneckenwelle (23) kämmendes Schneckenrad (31) aus POM-Kunststoff mit einem beigemischten gleitfreundlich modifizierten POM-Kunststoff in einem Beimischungs-Anteil zwischen ca. 20%-50% in Abhängigkeit von der jeweiligen Steigungsauslegung der Schneckenwelle (23) bzw. dem jeweilig gewünschten selbsthemmenden Reibwert zwischen dem Schneckenrad (31) und der Schneckenwelle (23).

2. Kraftfahrzeug-Getriebemotorantreib nach Anspruch 1, **gekennzeichnet durch** ein Schneckenrad (31) aus Delrin 100 oder Delrin 500 mit einer Beimischung von gleitmodifiziertem Delrin 100 CL oder 500 CL.

3. Kraftfahrzeug-Getriebemotorantrieb nach Anspruch 1 und/oder 2, **gekennzeichnet durch** einen von einer äußeren Fettmittelbeigabe freien selbstschmierenden Getriebeantrieb zwischen der Schneckenwelle (23) und dem Schneckenrad (31).

4. Kraftfahrzeug-Getriebemotorantrieb nach zumindest einem der Ansprüche 1-3, **gekennzeichnet durch** eine Lagerung der Schneckenwelle (23) im Verbindungsbereich zwischen dem Getriebegehäuseteil (3) und dem Motorgehäuseteil (1) in einer Kalotte (4) mit einer getriebegehäuseseitig vor der Kalotte (4) in der Kalottenaufnahme (32) mitgehalterten und durch die Kalotte (4) dichtend gegen die Kalottenaufnahme (32) bzw. die Schneckenwelle (23) angedrückten einstückigen Doppellippen-Dcihtung (6) mit zumindest zwei axial in Abstand hintereinander dichtend auf der Rotorwelle (2) aufliegenden Dichtlippen (61 bzw.62) und einem zwischenliegenden Schmierstoff-Depot (63).

## Claims

1. Geared motor drive for automotive vehicles, in particular window-lifting drive, having a worm gear, comprising a worm shaft (23), on a rotor shaft (2) extended into a gear casing part (3) from a flange-mounted motor casing part (1) of an electric motor, and a worm wheel (31), meshing with the said worm shaft and mounted in the gear casing part (3), characterized by a worm wheel (31) of POM plastic meshing with a steel worm shaft (23) and having an admixed slide-enhancingly modified POM plastic in an admixture proportion of between about 20% and 50%, dependent on the respective pitch of the screw shaft (23) and the respectively desired self-locking friction value between the worm wheel (31) and the worm shaft (23).

2. Geared motor drive for automotive vehicles according to Claim 1, characterized by a worm wheel (31) of Delrin 100 or Delrin 500 with an admixture of slide-modified Delrin 100 CL or 500 CL.

3. Geared motor drive for automotive vehicles according to Claim 1 and/or 2, characterized by a self-lubricating geared drive, without any external addition of lubricant, between the worm shaft (23) and the worm wheel (31).

4. Geared motor drive for automotive vehicles according to at least one of Claims 1-3, characterized by a mounting of the worm shaft (23) in the region of connection between the gear casing part (3) and the motor casing part (1) in a spheroid (4) having a one-piece double-lip seal (6), which is secured along with the said spheroid (4) in front of the latter on the gear casing side in the spheroid mounting (32), is pressed by the spheroid (4) against the spheroid mounting (32) and the worm shaft (23) in a sealing manner and has at least two sealing lips (61 and 62), resting on the rotor shaft (2) axially spaced one behind the other in a sealing manner and an interposed lubricant depot (63).

## Revendications

1. Dispositif d'entraînement à moto-réducteur de véhicule automobile, notamment dispositif d'entraînement de lève-glace, comportant un engrenage à vis sans fin, constituée d'un arbre de vis sans fin (23) monté sur un arbre (2) du rotor, qui se prolonge dans une partie (3) de carter de protection de l'engrenage à partir d'une partie (1), raccordée par bride, du carter d'un moteur électrique, et d'une roue tangente (31), qui engrène avec l'arbre de la vis sans fin et est tourillonnée dans la partie (3) du carter de protection de l'engrenage, caractérisé par une roue tangente (31), qui engrène avec un arbre de vis sans fin en acier (23) et est en matière plastique POM, comportant, en un pourcentage d'addition compris entre environ 20 % et 50 %, une matière plastique POM ajoutée, modifiée de manière à faciliter le glissement, en fonction du choix respectif du pas de l'arbre de vis sans fin (23) ou du coefficient de frottement souhaité, réalisant un blocage automatique, entre la roue tangente (31) et l'arbre de vis sans fin (23).

2. Dispositif d'entraînement à moto-réducteur de véhicule automobile suivant la revendication 1, caractérisé par une roue tangente (31) en Delrin 100 ou en Delrin 500, auquel est ajouté du Delrin 100 CL ou 500 CL ayant une propriété de glissement modifiée.

3. Dispositif d'entraînement à moto-réducteur de véhicule automobile suivant la revendication 1 et/ou 2, caractérisé par un dispositif d'entraînement de l'engrenage autolubrifiant, exempt de tout apport extérieur de graisse, entre l'arbre de vis sans fin (23) et la roue tangente (31).

4. Dispositif d'entraînement à moto-réducteur de véhicule automobile suivant au moins l'une des revendications 1 à 3, caractérisé par un tourillonnage de l'arbre de vis sans fin (23) dans la zone de liaison entre la partie (3) du carter de protection de l'engrenage et la partie (1) du carter du moteur, dans une calotte (4), comportant une garniture d'étanchéité monobloc (6) à deux lèvres, qui est retenue conjointement, du côté du carter de protection de l'engrenage, dans le logement (32) de la calotte (4), en avant de cette dernière et est pressée par la calotte (4) d'une manière étanche contre le logement (32) de cette dernière ou contre l'arbre de vis sans fin (23), la garniture d'étanchéité (6) comportant au moins deux lèvres d'étanchéité (61 et 62), qui s'appliquent axialement d'une manière étanche sur l'arbre (2) du rotor à distance l'une derrière l'autre, et un logement intercalaire (63) pour un lubrifiant.
